(19) **Europäisches Patentamt**

**European Patent Office**

**Office européen des brevets**

(11) **EP 1 394 982 B1**

(12) **EUROPEAN PATENT SPECIFICATION**

(45) Date of publication and mention
of the grant of the patent:
**11.10.2006 Bulletin 2006/41**

(51) Int Cl.:
*H04L 9/32* (2006.01)

(21) Application number: **03255384.4**

(22) Date of filing: **29.08.2003**

(54) **Methods and apparatus for secure data communication links**

Verfahren und Vorrichtung für sichere Datenkommunikationsverbindungen

Procédés et dispositif pour liaisons de communication de données sécurisées

(84) Designated Contracting States:
**DE FR**

(30) Priority: **30.08.2002 GB 0220203**

(43) Date of publication of application:
**03.03.2004 Bulletin 2004/10**

(73) Proprietor: **KABUSHIKI KAISHA TOSHIBA**
**Tokyo 105-8001 (JP)**

(72) Inventors:
• **Kalogridis, Georgios**
**Bristol BS1 4ND (GB)**
• **Clemo, Gary**
**Bristol BS1 4ND (GB)**
• **Yeun, Chan Yeob**
**Bristol BS1 4ND (GB)**

(74) Representative: **Midgley, Jonathan Lee**
**Marks & Clerk**
**90 Long Acre**
**London WC2E 9RA (GB)**

(56) References cited:
**GB-A- 2 337 145        US-A- 5 224 163**
**US-A1- 2001 005 841**

• **CALVELLI C ET AL: "An analysis of some delegation protocols for distributed systems" COMPUTER SECURITY FOUNDATIONS WORKSHOP V, 1992. PROCEEDINGS. FRANCONIA, NH, USA 16-18 JUNE 1992, LOS ALAMITOS, CA, USA,IEEE COMPUT. SOC, US, 16 June 1992 (1992-06-16), pages 92-110, XP010029254 ISBN: 0-8186-2850-2**
• **NEUMAN B C: "Proxy-based authorization and accounting for distributed systems" PROCEEDINGS OF THE INTERNATIONAL CONFERENCE ON DISTRIBUTED COMPUTING SYSTEMS. PITTSBURGH, MAY 25 - 28, 1993, LOS ALAMITOS, IEEE COMP. SOC. PRESS, US, vol. CONF. 13, 25 May 1993 (1993-05-25), pages 283-291, XP010095707 ISBN: 0-8186-3770-6**

**Description**

This invention generally relates to methods, apparatus and computer program code for secure communication links, in particular where accountability is required. The invention is particularly useful for establishing chains of accountability in systems where trust is delegated.

Secure data transmission is important for m-commerce, such as the purchase of software components, system, or application software to adapt a terminal's mode of operation. The secure download and installation of software onto mobile terminals is also important for multimedia entertainment, tele-medicine, upgrades for programmable mobile terminals, upgrades to different wireless standards, and the like. Reconfigurable mobile terminals are able to provide increased flexibility for end users who can customise the terminals for their personal needs by downloading and installing the desired applications, for example to support different types of radio systems and to allow the integration of different systems. However techniques are needed to protect mobile terminals against hackers maliciously substituting their software for software available from a handset manufacturer, network operator or trusted third party source.

A PAN may include a number of mobile devices which need to exchange information with each other and with their users. Technologies such as cellular radio, Bluetooth (Trade Mark) (Bluetooth Special Interest Group (SIG), http://www.bluetooth.com./), IrDA (Infrared Data Association (IrDA), http ://www.irda.org/) and WLAN (for example Wireless Local Area Network IEEE Standard 802.11, "1999 Edition ISO/IEC 8802-5-1998, Standards for Local and Metropolitan Area Networks - Wireless LAN Medium Access Control (MAC) and Physical Layer (PHY) specifications," 1999) may be employed. Secure data transfer is needed for properties such as confidentiality, integrity, authentication, and non-repudiation of data.

There is often a limited amount of trust between mobile terminals such as Pocket PCs, mobile phones and laptops in a PAN (Personal Area Network) environment. There is a need for protocols for secure mobile delegation for reconfigurable mobile terminals operating in a Personal Area Network (PAN) context. In particular there is a need for secure key distribution techniques to support secure delegation for reconfigurable terminals in a PAN context. In a PAN environment a device may need to reconfigure, for example, to connect to an alternative network and/or to receive application services via other mobile terminals with different network providers. The ability of a device to reconfigure raises a number of security issues that need to be addressed in order to realize the potential of the reconfigurable domain. A highly distributed environment suggests the requirement for security delegation techniques. Additionally, threats increase from malicious software such as viruses, Trojan horses and worms. One can potentially employ secure mobile delegation for securing software modifications/upgrades in reconfigurable terminals, from high level applications and system software, such as ring tones, down to lower-layer baseband modules.

It is useful to review general cryptographic techniques. Broadly speaking at present two basic cryptographic techniques, symmetric and asymmetric, are employed, to provide secure data transmission for example for software download. Symmetric cryptography uses a common secret key for both encryption and decryption, along traditional lines. The data is protected by restricting access to this secret key and by key management techniques, for example, using a different key for each transmission or for a small group of data transmissions. A well-known example of symmetric cryptography is the US Data Encryption Standard (DES) algorithm (FIPS-46, FIPS-47-1, FIPS-74, FIPS-81 of the US National Bureau Standards). A variant of this is triple DES (3DES) in which three keys are used in succession to provide additional security. Other examples of symmetric cryptographic algorithms are RC4 from RSA Data Security, Inc and the International Data Encryption Algorithm (IDEA).

Asymmetric or so-called public key cryptography uses a pair of keys one "private" and one "public" (although in practice distribution of the public key is also often restricted). A message encrypted with the public key can only be decrypted with the private key, and vice-versa. An individual can thus encrypt data using the private key for decryption by any one with the corresponding public key and, similarly, anyone with the public key can securely send data to the individual by encrypting it with the public key safe in the knowledge that only the private key can be used to decrypt the data.

Asymmetric cryptographic systems are generally used within an infrastructure known as Public Key Infrastructure (PKI) which provides key management functions. Asymmetric cryptography can also be used to digitally sign messages by encrypting either the message or a message digest, using the private key. Providing the recipient has the original message they can compute the same digest and thus authenticate the signature by decrypting the message digest using the corresponding public key obtained, for example, from a digital certificate (see below). A message digest is derived from the original message and is generally shorter than the original message making it difficult to compute the original message from the digest; a so-called hash function (h) may be used to generate a message digest. Examples of one-way collision-resistant (hard to guess) hash functions are given in R. Rivest, "The MD4 message-digest algorithm," Internet Request for Comments 1320, April 1992, and R. Rivest, "The MD5 message-digest algorithm," Internet Request for Comments 1321, April 1992.

An equivalent to a digital signature exists in symmetric cryptography, a so-called MAC (Message Authentication Code), which is computed using a shared secret key.
Examples of MACs can be found in ISO 8731-1, "Banking - Approved algorithms for message authentication - Part 1:

DEA", International Organisation for Standardization, Geneva, Switzerland, 1987. Another example of a MAC is a keyed hash function as described, for example, in Computer Data Authentication, National Bureau of Standards FIPS Publication 113, 1985. A MAC can check the integrity of a received software module, for example by comparing hash values of the received software module and one contained in an associated installation ticket. However this technique does not guarantee non-repudiation in the event of any dispute between the trusted provider and a terminal user, since the secret key is shared.

A Public Key Infrastructure normally includes provision for digital identity Certificates. To prevent an individual posing as somebody else an individual may prove his identity to a certification authority which then issues a certificate signed using the authority's private key and including the public key of the individual. The Certification Authority's (CA's) public key is widely known and therefore trusted and since the certificate could only have been encrypted using the authority's private key, the public key of the individual is verified by the certificate. Within the context of a mobile phone network a user or the network operator can authenticate their identity by signing a message with their private key; likewise a public key can be used to verify an identity. Further details of PKI for wireless applications can be found in WPKI, WAP-217-WPKI, version 24 -April 2001 available at www.wapforum.org and in the X.509 specifications (PKIX) which can be found at www.ietf.org, all hereby incorporated by reference.

In embodiments of the invention to be described later it is assumed that PKI (Public Key Infrastructure) is employed. In such an environment trusted parties such as manufacturers and operators typically issue their certificates to mobile terminals which store them in secure tamper resistance modules such as smart or other cards (for example, a SIM: Subscriber Identity Module, WIM: Wireless Identity Module, SWIM: Combined SIM and WIM, USIM: Universal Subscriber Identity Module). More generally public keys may be stored in the terminal at manufacture, or on a SIM card, or they may be downloaded. For example a mobile terminal may access a read-only directory of a network operator to down load public keys or certificates for other mobile terminals.

PKI provides non-repudiation and protects both parties; by contrast a symmetric session key provides a low overhead and fast download (for example, once it has been transported, say using the a certified public key, from another trusted party). Such a session key may be valid for only a short period for increased security. Techniques for secure software download using asymmetric cryptographic techniques to establish a communications link using symmetric cryptography are described in C. Yeun and T. Farnham, "Secure Software Download for Programmable Mobile User Equipment", IEE 3G Mobile Communication Technologies conference, 8-10 May 2002, and also in the applicant's co-pending UK patent applications, numbers 0201048.6 and 0201049.4 both filed on 17th January 2002.

Asymmetric cryptography was first publicly disclosed by Diffie and Hellman in 1976 (W. Diffie and D.E. Hellman, "New directions in cryptography", IEEE Transactions on Information Theory, 22 (1976), 644-654) and a number of asymmetric cryptographic techniques are now in the public domain of which the best known is the RSA (Rivest, Shamir and Adleman) algorithm (R.L. Rivest, A. Shamir and L.M. Adleman, "A method for obtaining digital signatures and public-key cryptosystems", Communications of the ACM, 21 (1978), 120-126). Other more recent algorithms including elliptic curve crypto systems (see, for example, X9.63, "Public key cryptography for the financial services industry: Key agreement and key transport using elliptic curve cryptography", Draft ANSI X9F1, October (1999)). The X.509 ITU (International Telecommunications Union) standard is commonly used for public key certificates. In this a certificate comprising a unique identifier for a key issuer, together with the public key (and normally information about the algorithm and certification authority) is included a directory, that is a public repository of certificates for use by individuals and organisations.

The symmetric and asymmetric cryptographic techniques outlined above each have advantages and disadvantages. Asymmetric approaches are less resource-efficient, requiring complex calculations and relatively longer key lengths than symmetric approaches to achieve a corresponding level of security. A symmetric approach, however, requires storage of secret keys within the terminal and does not provide non-repudiation (proving the sending or reception of data).

Data transmission is becoming increasingly important within mobile phone networks and, in particular, this is important to so-called 2.5G and 3G (Third Generation) networks as described, for example, in the standards produced by the Third Generation Partnership Project (3GPP, 3GPP2), technical specifications for which can be found at www.3gpp.org, and which are hereby incorporated by reference.

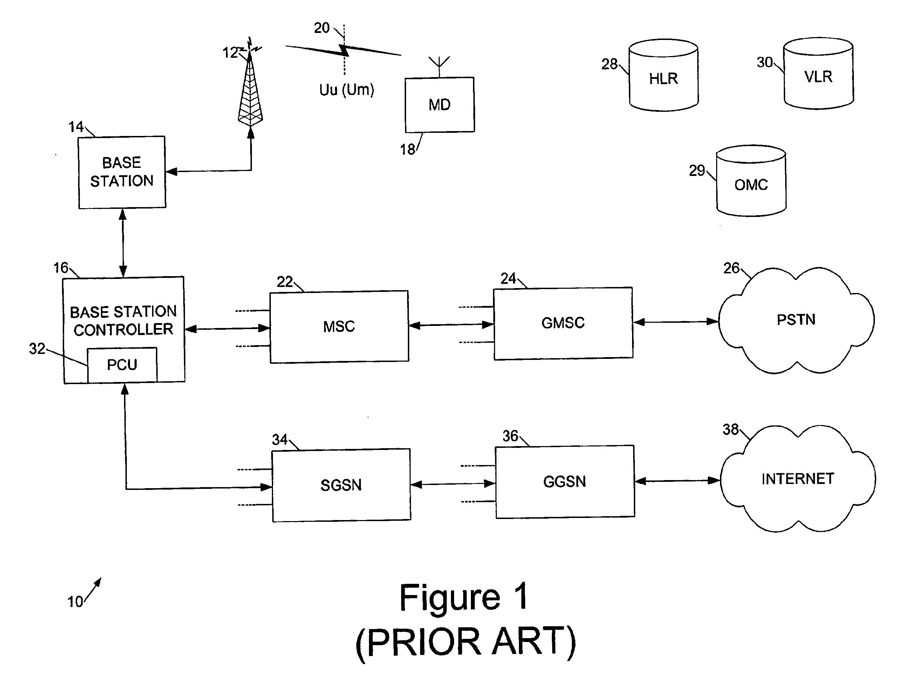

Figure 1 shows a generic structure of a third generation digital mobile phone system at 10. In Figure 1 a radio mast 12 is coupled to a base station 14 which in turn is controlled by a base station controller 16. A mobile communications device 18 is shown in two-way communication with base station 14 across a radio or air interface 20, known as a Um interface in GSM (Global Systems for Mobile Communications) networks and GPRS (General Packet Radio Service) networks and a Uu interface in CDMA2000 and W-CDMA networks. Typically at any one time a plurality of mobile devices 18 are attached to a given base station, which includes a plurality of radio transceivers to serve these devices.

Base station controller 16 is coupled, together with a plurality of other base station controllers (not shown) to a mobile switching centre (MSC) 22. A plurality of such MSCs are in turn coupled to a gateway MSC (GMSC) 24 which connects the mobile phone network to the public switched telephone network (PSTN) 26. A home location register (HLR) 28 and a visitor location register (VLR) 30 manage call routing and roaming and other systems (not shown) manage authentication, billing. An operation and maintenance centre (OMC) 29 collects the statistics from network infrastructure elements such as base stations and switches to provide network operators with a high level view of the network's performance. The OMC can be used, for example, to determine how much of the available capacity of the network or parts of the network is being used at different times of day.

The above described network infrastructure essentially manages circuit switched voice connections between a mobile communications device 18 and other mobile devices and/or PSTN 26. So-called 2.5G networks such as GPRS, and 3G networks, add packet data services to the circuit switched voice services. In broad terms a packet control unit (PCU) 32 is added to the base station controller 16 and this is connected to a packet data network such as Internet 38 by means of a hierarchical series of switches. In a GSM-based network these comprise a serving GPRS support node (SGSN) 34 and a gateway GPRS support node (GGSM) 36. It will be appreciated that both in the system of Figure 1 and in the system described later the functionalities of elements within the network may reside on a single physical node or on separate physical nodes of the system.

Communications between the mobile device 18 and the network infrastructure generally include both data and control signals. The data may comprise digitally encoded voice data or a data modem may be employed to transparently communicate data to and from the mobile device. In a GSM-type network text and other low-bandwidth data may also be sent using the GSM Short Message Service (SMS).

In a 2.5G or 3G network mobile device 18 may provide more than a simple voice connection to another phone. For example mobile device 18 may additionally or alternatively provide access to video and/or multimedia data services, web browsing, e-mail and other data services. Logically mobile device 18 may be considered to comprise a mobile terminal (incorporating a subscriber identity module (SIM) card) with a serial connection to terminal equipment such as a data processor or personal computer. Generally once the mobile device has attached to the network it is "always on" and user data can be transferred transparently between the device and an external data network, for example by means of standard AT commands at the mobile terminal-terminal equipment interface. Where a conventional mobile phone is employed for mobile device 18 a terminal adapter, such as a GSM data card, may be needed.

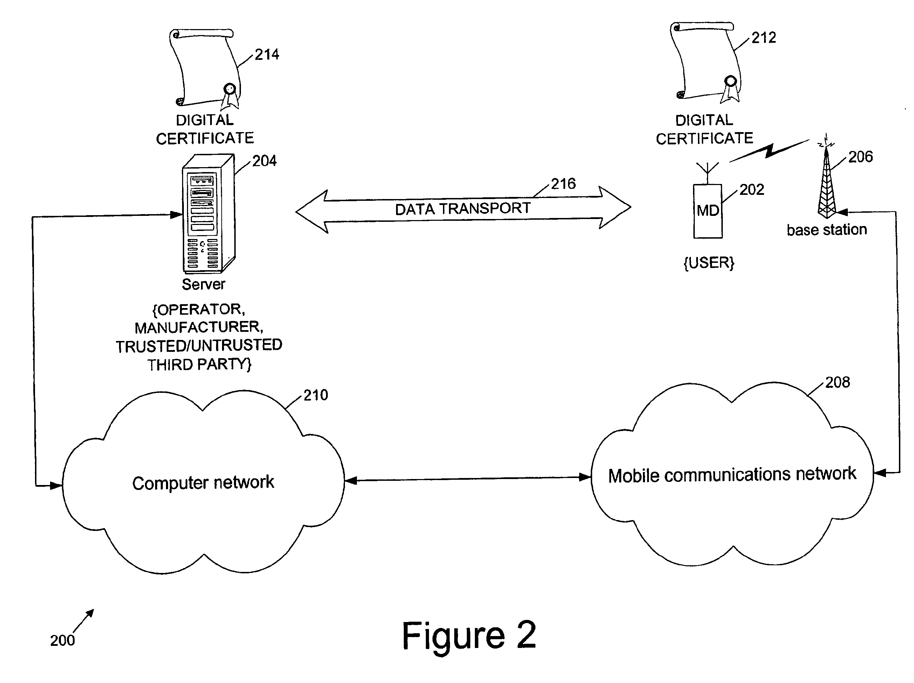

Figure 2 schematically illustrates a model 200 of a basic secure mobile communications system. A mobile device or terminal 202 is coupled to a mobile communications network 208, such as a mobile phone network or WLAN, via a fixed or base station 206. The mobile communications network 208 is in turn coupled to a computer network 210, such as the Internet, to which is attached a server 204. One or both of mobile device 202 and server 204 stores a digital certificate, digital certificate 212 stored in mobile device 202 including a public key for server 204 and digital certificate 214 stored in server 204 including a public key for the mobile device 202 (in other arrangements these may be downloaded as needed). The server may be operated, for example, by a network operator, mobile device manufacturer, or by a third party. The mobile device is typically operated by a user and, for simplicity, only a single mobile device is shown although in general there is a plurality of such devices. A communication mechanism 216 is provided to transport data between the mobile device 202 and the server 204, but typically such data travels via a plurality of intermediaries (not shown in Figure 2).

In the context of 3G mobile phone systems standards for secure data transmission have yet to be determined and discussions are currently taking place in the MExE forum (Mobile station application Execution Environment forum) at www.mexeforum.org. Reference may also be made to ISO/IEC 1170-3, "Information Technology - Security Techniques - Key Management - Part 3: Mechanism Using Asymmetric Techniques", DIS 1996.

Broadly speaking MexE defines a standardised application environment. A Delegation Protocol for a distributed network is set out, in particular, in 3GPP TS 23.057 "Mobile Station Application Execution Environment (MExE). A relatively simple authentication protocol, using PKI, is currently envisaged in which the mobile terminal (MT) has a public key, either a root key securely installed in the MT (for example root keys for a number of CAs may be installed during manufacture), or a signed public key attached to or provided in a certificate. This public key is then used to check an executable signed with a corresponding private key. For example where software is obtained from a third party software developer the developer generates (or obtains from a CA) a public-private key pair and a certificate (signed by the CA and including the developer's public key). This (or in some instances a set of certificates for a key chain) is appended to the executable and the MT can then verify that the software was signed by a private key corresponding to the developer's (certificated) public key.

Reconfigurable, software defined radio (SDR) concepts have also been the subject of recent, active research (see, for example, "Authorization and use of Software Defined Radio: First Report and Order," U.S. Federal Communication Commission Washington, DC, September 2001). SDR-enabled user devices and network equipment can be dynamically programmed to reconfigure their characteristics to provide improved performance and/or additional features, and hence also offer the opportunity of additional revenue streams for a service provider. Software defined radio has applications in both civil and commercial and military sectors.

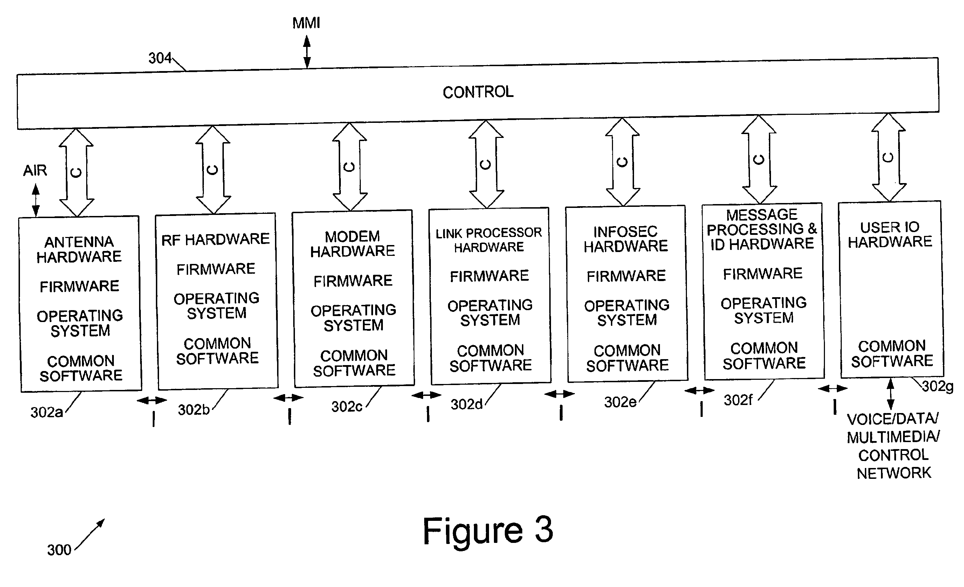

The SDR Forum (Software Defined Radio (SDR) Forum, http://www.sdrforum.org/) has defined an open architecture with a common software API layer with standardised functions. An outline of this arrangement is shown in Figure 3. In Figure 3 an SDR comprises a set of seven independent subsystems 302a-g each in turn comprising hardware, firmware, an operating system and software modules which may be common to more than one application. A Control function 304 provides control ('C') over each of the functional blocks, user traffic ('I') comprising data and information being exchanged between the modules. An SDR implementation in a mobile (wireless) terminal is analogous to software running on a generic PC, although for speed some baseband service implementations and control functions interface directly to the hardware layer rather than, say, via an intermediate real-time kernel or drivers. The SDR system of Figure 3 is suitable for use in implementing later described embodiments of methods according to the invention.

There is, however, a need to combine secure delegation concepts with secure (SDR) software download, for example in the context of a PAN. The reconfiguration process needs to obtain requirements, capabilities and profiles from applications, devices, and users, collating information from network detection or monitoring entities and downloading software components from repositories. This is potentially a highly distributed environment in which the delegation of trust is important.

Some of the aims of a security system are authentication (of the data originator or recipient, e.g. with password and/or biometric techniques), access control, non-repudiation, integrity of the transmitted data, e.g. between PAN nodes, and confidentiality (e.g. by encrypting messages between PAN nodes). There may also be provision for "anonymous" data download, that is the provision or broadcasting of data without specifically identifying a recipient. However existing security mechanisms lack support for accountability and the delegation of tasks to other entities. In this context, broadly speaking accountability refers to the association of an object, action or right with an entity, preferably in such a way that the association can be proved (or at least determined with a high probability) to another entity or party. Broadly speaking delegation refers to the authorisation (for example, to perform an action) of a second entity by a first, by sharing rights (or some portion of security policy or other data) so that the second entity is enabled to act in place of the first. Where accountability is delegated the rights or other data are preferably transferred rather than shared so that an action can be unambiguously linked with an entity.

Background prior art relating to secure delegation protocols can be found in M. Gasser and E. McDermott, "An architecture for practical delegation in a distributed system", *Proceedings of the IEEE Symposium on Security and Privacy*, pp. 20-30, 1990; M. Low and B. Christianson, "Self authenticating proxies", *Computer Journal*, Vol 33, pp. 422-428, October 1994; Y. Ding, P. Horster and H. Petersen, "A new approach for delegation using hierarchical delegation token", *Proceedings of the 2nd Conference on Computer and Communication Security*," pp 128-143, 1996; and particularly in B. Crispo, "Delegation Protocols for Electronic Commerce", *Proceedings of the 6th IEEE Symposium on Computers and Communications,* Hammamet, Tunisia, 3 - 5 July 2001. However current solutions either lack accountability and trust or are relatively inefficient. In particular the protocol proposed in Crispo (*ibid*) requires four message passes and is limited to asymmetric techniques, and is of a complexity which in practice prevents cascading delegations.

It is desirable to provide protocols with fewer message passes than taught by the prior art, preferably capable of operating with both asymmetric and symmetric cryptographic techniques. It is further desirable to provide protocols which are suitable for cascade delegation whilst maintaining relatively compact and efficient messages.

GB 2,337,145A describes a method for delegating use of an electronic key for applying digital signatures in which the key is stored on a smart card of a primary user and a delegate is sent an electronic delegation certificate, which is included in a message from the delegate to the smart card requesting use of the key (for affixing a signature). US 2001/005841 describes an authorisation delegation chain using attribute certificates, and US 5,224,163 describes a method for delegating authorisation in a computing system.

The document "Proxy-based authorization and accounting for distributed systems", Neuman B. C., Proceedings of the International Conference on Distributed Computing Systems. Pittsburgh, May 25-28, 1993, Los Alamitos, IEEE Comp. Soc. Press, US, pp. 283-291, discloses a method comprising transferring a delegation key securely to a delegate system.

Broadly speaking in embodiments of methods described herein, to address issues of accountability with known protocols, two different keys are introduced, one merely for authentication and a separate key to act as a delegation key. This allows the validity period of authentication and of delegation to be independent and such a separation also facilitates implementation of role-based models. For example, were the key functions not separated should the delegated rights/accountability have a different lifetime to the authentication key, the renewal of a key could be very cumbersome. In addition the protocols described herein facilitate cascade delegation and maintain end-to-end accountability among all the involved entities (for example Mobile Agents).

According to one aspect of the invention there is therefore provided a method of initializing a secure communications link between a first, delegating data processing system (A) and a second data processing system (B) to which the first system delegates, the method using a first delegation token (DT) comprising a first delegation key ($K_{P-T-E}$) and associated first request data (R), said first request data denoting a request of the first system and said first delegation key being for encrypting data to be sent back to the first system in response to the request, the method comprising: generating at said first system a first message (M1) comprising said first delegation key and associated first request data and first authentication data ($S_A$) for authenticating said first, delegating system, said first authentication data being generated by operating on at least one of said first delegation key and said first request data with a secret authentication key of said first system; encrypting said first message using a link encryption key ($P_B$) known to both said first and said second data processing systems to form an encrypted first message; and sending said encrypted first message from said first system to said second system to initialize said secure communications link.

Preferably the authentication data is generated by operating on both the first key and first request data, that is by operating on the first token. The token is, in effect, a delegation token comprising a delegation key, and the message comprising the token, in particular the authentication data, is verifiable, for example because the authentication data comprises a digital signature or MAC (message authentication code).

The secret key of the first system may comprise a private key, the corresponding public key of which is accessible to the second system, or it may comprise a secret key shared between (at least) the first and second system, or it may comprise the first (i.e. delegation) key (for example where non-repudiation rather than encryption is most important). Preferably, however, the secret key is a private key of an asymmetric (public key) cryptographic system.

The key known to both the first and second data processing systems used to encrypt the first message may be a key for a symmetric or for an asymmetric cryptographic system. In the case of an asymmetric cryptographic system the key may comprise a public key of the second system (theoretically the second system only needs to know the private counterpart to the public key although in practice the second system will know both the private and the public key). The encrypted message may be sent over any conventional communications link, such as a wired or wireless link.

The request data may comprise data for requesting a role, task, service, or data such as software, or some other request data. The first or delegation key may be used by the second system or, in a chain of delegations, by an end system, for establishing a secure chain of communication with the first or start point system. Thus the first or delegation key may be used for encrypting data to be sent back to the first system, or it may be used for some other security function such as a digital signature to confirm an identity (a digital signature may be viewed as a specific type of encrypted data). Data may be sent back to the first system either directly or along a chain of systems. In such a chain of systems the first key may be used for direct communication between the end system and the first system, but where data is sent back along the chain of systems, that is indirectly, a set or chain of delegation keys is employed, one for each link in the chain.

Where the first data processing system is an intermediate data processing system in a chain of data processing systems the method may further comprise receiving at the first data processing system from a previous data processing system a previous encrypted message comprising a previous token and previous authentication data, the previous token comprising a previous key and associated previous request data, the previous authentication data comprising data generated by operating on at least one of the previous key and the previous request data with a secret key of the previous system; decrypting the previous encrypted message using a key known to both the first and the previous data processing systems; and including the previous token and the previous authentication data in the first message.

Preferably the previous authentication data is verified, for example by operating on the previous authentication data with a public key of the previous system or by operating on the authentication data with a shared key of a symmetric cryptographic system. Likewise the first authentication data may be verified at the second data processing system. In this way a secure communications link may be established between each pair of data processing systems in the chain, each data processing system verifying the authentication data associated with the delegation token received from the previous system.

Although a "chain" of data processing systems is referred to this does not preclude other communication links between elements of the chain so that, for example, the chain may comprise a sequence of elements in a multiply-connected network of elements. Embodiments of the delegation process, however, are able to establish a secure chain comprising a sequence of secure links within such a network.

In another aspect the invention provides a method of establishing a chain of secure communication links between a plurality of data processing machines such that the identity of each successive data processing machine making up the chain is able to be confirmed by means of respective authentication data, the method comprising performing, at each successive data processing machine in the chain after a first machine, the steps of: receiving from a previous data processing machine (A) in the chain an encrypted message generated by the method of claim 1 including said first authentication ($S_A$) data and said first delegation token (DT) which includes said first delegation key ($K_{P-T-E}$), said first delegation key being for encrypting data to be sent back to the first system; decrypting said encrypted message; adding to the decrypted message further delegation token data ($DT^1$) and further authentication data ($S_B$) for said successive data processing machine to form an extended message (M2); encrypting said extended message; and forwarding said encrypted extended message to the next machine (C) in the chain; until an end machine of the chain is reached, whereby said chain of secure communication links is established.

The invention also provides a data processing system, and data processing systems, configured or programmed to implement the above-described methods.

In a further aspect, therefore, the invention provides data processing apparatus for delegating to a second data processing system using a delegation token (DT) comprising a delegation key ($K_{P-T-E}$) and associated request data (R), said request data denoting a request of the system and said delegation key being for encrypting data to be sent back to the system in response to the request, the apparatus, comprising: a data memory operable to store data to be processed; an instruction memory storing processor implementable instructions; and a processor coupled to the data memory and to the instruction memory and operable to process data in accordance with the instructions, the instructions comprising instructions for controlling the processor to: generate at said system a message (M1) comprising said delegation key and associated request data and authentication data ($S_A$) for authenticating said delegating system, said authentication data being generated by operating on at least one of said delegation key and said request data with a secret authentication key of said system; encrypt said message using a link encryption key ($P_B$) known to both said first and said second data processing systems to form an encrypted message; and send said encrypted message from said system to said second system to initialize said secure communications link.

This data processing apparatus may comprise, for example, a smart terminal or a dumb terminal in association with another processing system, for example to perform the required cryptographic functions.

In further aspects the invention provides computer program code to implement the above-described methods on one or more data processing systems of a chain. This code is preferably stored on a carrier such as a hard or floppy disk, CD- or DVD-ROM or on a programmed memory such as a read-only memory or Flash memory, or it may be provided on an optical or electrical signal carrier. The skilled person will appreciate that the invention may be implemented either purely on software or by a combination of software (or firmware) and hardware, or purely in hardware. Likewise the steps of the method need not be necessarily be performed within a single processing element but could be distributed amongst a plurality of such elements, for example on a network of processors.

Embodiments of the invention thus facilitate the downloading of software, tickets, coupons and other data, for example excerpts of streamed media data such as music and MPEG movie clips and m-commerce data.

The invention will now be further described, by way of example only, with reference to the accompanying figures in which:

Figure 1 shows a generic structure for a 3G mobile phone system;

Figure 2 shows a schematic representation of a secure communications link between a mobile terminal of a communications network and a server;

Figure 3 shows an example of a software defined radio (SDR) hardware and software architecture;

Figure 4 shows an example of a personal area network and related infrastructure;

Figure 5 shows a chain of mobile entities in communication with a server, configured to implement a secure delegation protocol; and

Figure 6 shows a computer system suitable for use as a terminal or the server of Figure 5, for implementing a method according to an embodiment of the present invention.

People are increasingly dependent upon mobile phones, laptops, PDAs and similar equipment and may also carry peripherals such as headsets and music players. The concept of a personal area network (PAN) contemplates local (i.e. personal) communication between these devices using technologies such as IrDA, Bluetooth and/or WLAN technologies (e.g. IEEE 802.11). Some PANs may include a component administrator to provide policing of authorization authority. Terminals of a PAN are generally categorized into two classes, smart terminals (such as a PDA, smart phone, laptop or car) which may control and configure the PAN, and dumb terminals (such as printers, scanners, storage media, and user interface devices) which generally only provide one function and connect to smart terminals. A dumb terminal may communicate with a smart terminal, for example to evaluate a request for a delegation token, the smart terminal returning a result of such evaluation. The two classes of terminal are expected to support a unified configuration and access control interface both at the per device level and at the PAN level. For dumb terminals this is in addition to their specialized functionality and can include key management capability, software upgrade capability and service advertisement. Some dumb terminals may also be able to perform service discovery and may even be able to require services from other devices unassisted.

There are two main security issues for downloaded software, firstly protecting the origin and integrity of the software against any accidental or deliberate corruption, and secondly providing an authorization system which enables, for example an SDR, to make an automatic decision as to whether or not to accept downloaded software and, by implication, to use it to reconfigure the SDR. The addition of a digital signature in PKI to a piece of code can be used by the code's recipient to verify its correctness and origin. As described above, the public key necessary to verify the signature may be obtained from a public key certificate either sent with the signed code or retrieved from a repository by the code's recipient. Once the code has been verified the SDR can decide whether or not to accept the code based on one or more of the identity of the certificate authority, policy identifiers in the certificate(s) which were verified in order to obtain the code signers public key, one or more policy statement built into the device by the manufacturer together with any policy statements input by the device's owner and/or user, and any information associated directly with the code, such as details of the intended scope of use of the code.

In embodiments of the invention employing asymmetric (i.e. public key) cryptography we assume that PKI is employed and that trusted parties such as manufacturers, operators, trusted third parties and government regulators issue their certificate to mobile terminals, which can store them, for example in tamper-resistant hardware modules. A PKI infrastructure is not necessary in some of the embodiments which employ symmetric (i.e. shared secret key) cryptography, for example where only assurance of integrity is required.

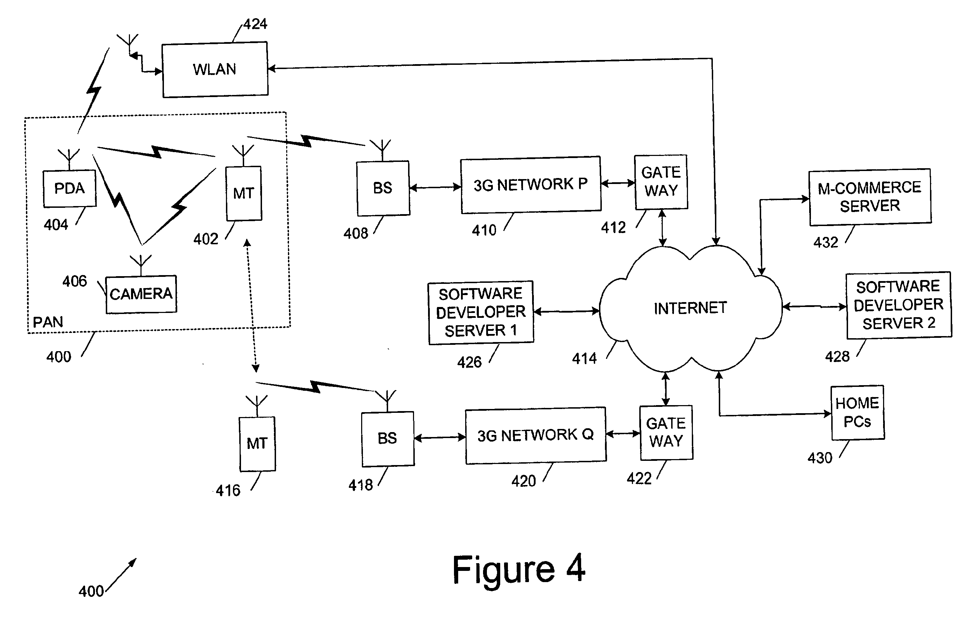

Figure 4 shows an example of a PAN and associated network infrastructure. A PAN 400 in the illustrated example comprises a mobile terminal 402, a PDA 404 and a camera 406 in wireless (rf) communication with one another. Mobile terminal 402 is also in communication with a base station 408 of a first 3G mobile phone network 410 which has a gateway 412 to Internet 414. A second mobile terminal 416 carried by a second user is in communication with a second base station 418 of a second 3G mobile phone network 420 with a second gateway 422 to Internet 414. PDA 404 is also in communication with a WLAN 424, such as an IEEE 802.11 WLAN, which is also coupled to Internet 414. As will be appreciated many other systems may be coupled to the Internet, as illustrated first and second third party software developer servers 426, 428, home PCs 430, and one or more m-commerce servers 432. Mobile terminals 402 and 416 may also have a direct line of communication with one another, as illustrated by dashed line 434, for example via a Bluetooth link.

It is helpful to illustrate the use of delegation by an example. In a simple example the user of mobile terminal 402 may wish to upgrade their terminal software, by downloading new software from the manufacturer of the terminal. To achieve this mobile terminal 402 may pass a delegation token (DT) to a service provider or network operator of phone network 410, which in turn passes the delegation token to the manufacturer, the manufacturer then delegating the task of performing the software upgrade to the service provider or network operator.

In another example the user of mobile terminal 402 (who henceforth will be referred to as Mobile Agent A) wants to acquire a clip of a new movie (or some other software) but the associated network 410 does not provide this service. However network 420, run by a different operator, does provide this service and Mobile Agent A is therefore able to obtain the movie clip from the user of mobile terminal 416 (who will henceforth be referred to Mobile Agent B) who, if necessary, first obtains it from network 420. In what follows two examples will be considered, firstly that where Mobile Agent A can obtain the movie clip directly from Mobile Agent B, and secondly a situation where Mobile Agent B must request the clip from a further Mobile Agent C, in this case network operator 420.

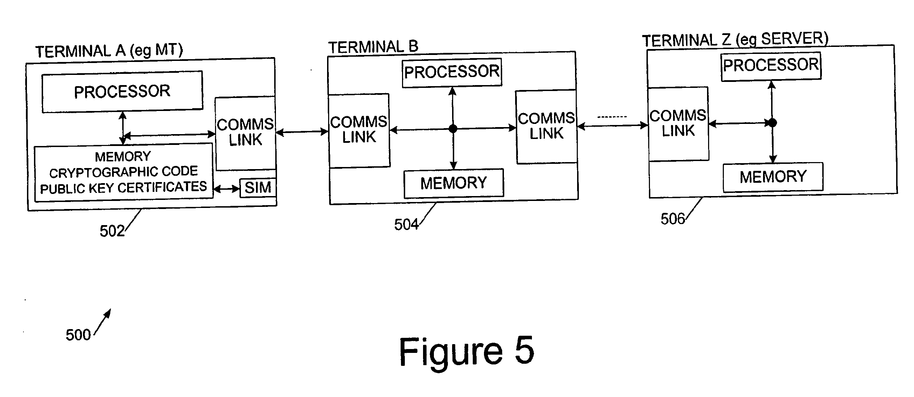

Figure 5 shows a chain 500 of terminals beginning with a mobile terminal A 502, which is in communication with a second terminal B 504 ultimately, in the illustrated example, the chain ending in a terminal Z 506 such as a server. Each terminal comprises a processor coupled to memory, the memory storing cryptographic code such as symmetric and/or asymmetric encryption and decryption code, and public key certificates (or, in other embodiments, shared symmetric keys). Each processor is also coupled to one or more communications links to implement wireless (or wired) communication links with the terminal or terminals to either side in the chain. Terminal A 502 in the illustrated example comprises a mobile terminal with a SIM card, which may also store, for example, digital certificate data.

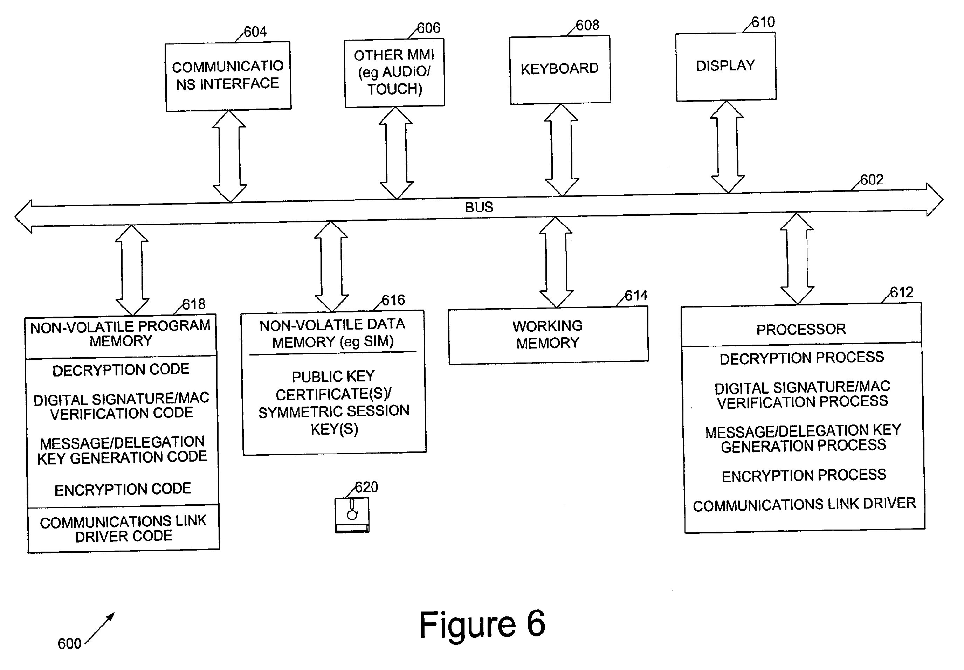

Figure 6 shows a general-purpose computer system 600 suitable for use as one of the terminals of the chain. The computer system 600 comprises an address and databus 602 to which is coupled a keyboard 608, display 610 and a man-machine interface (MMI) 606 such as an audio and/or tough screen interface. In some embodiments a cryptographic processing system, that is memory and a (possibly dedicated) processor may be provided on a removeable card such as a SIM card. Figure 6 may thus represent such a system, although the MMI will then generally be absent. Also coupled to bus 602 is a communications interface 604 such as a network interface (for a server), a radio or infrared interface (for a phone or PDA) or a contact pad interface (for a SIM card). Further coupled to bus 602 are a processor 612, working memory 614, non-volatile data memory 616, and non-volatile programme memory 618, the non-volatile memory typically comprising Flash memory.

The non-volatile programme memory 618 stores cryptography code, that is encryption and decryption code, digital signature/MAC verification code, message and delegation key generation code, and driver code for the communications interface. Processor 612 implements this code to provide corresponding processes to implement methods according to embodiments of the invention. The non-volatile data memory 616 stores a public key, preferably within a digital certificate (where asymmetric cryptography is employed) and/or symmetric session keys certificate (where symmetric cryptography is employed).

The working memory can be used to store one or more delegation tokens including delegation keys, and software received or downloaded for passing on to another terminal (at the end of the chain this software may be stored in non-volatile memory, eg in a SDR). The software may comprise computer program code and/or data such as video or MP3 data.

For convenience in the following text reference will be made to Mobile Agents as the protocols described are particularly useful for communication between such agents. However this should not be construed as in any way limiting the applications of the protocols, which may also be usefully employed with fixed agents or terminals. Furthermore "terminal" is here used in a broad sense to indicate a data processing system with some communication capability.

In one embodiment of a protocol for secure mobile delegation, for example for a reconfigurable terminal, a Mobile Agent $A$ sends a signed message $M1$ to a Mobile Agent $B$ as set out in Equation 1 below.

$$M1 : A \rightarrow B : B \| T_A / N_A \| P_B(K_{P-T-E} \| \Gamma \| S_A(h(DT))) \qquad \text{(Equation 1)}$$

where $A \rightarrow B$ denotes that $A$ sends $M1$ to $B$ and $\|$ denotes concatenation of data. In Equation 1 $DT$ is a Delegation Token and $P_B(Y)$ denotes asymmetric (public key) encryption (for example, using RSA) of $Y$ using $B$'s public key, $S_A(Y)$ denotes a signature operation on $Y$ using $A$'s private (signature) key and $h$ denotes a one-way collision-resistant hash function (such as the above mentioned MD4 or MD5 algorithms). The delegation token, $DT$, is given by:

$$DT = K_{P-T-E} \| B \| T_A / N_A \| \Gamma \qquad \text{(Equation 2)}$$

where $\Gamma = (R,L)$, $R$ denoting a request or set of roles or tasks and $L$ denoting a lifespan of the delegation token $DT$ that was generated by Mobile Agent $A$, and where $K_{P-T-E}$ is called a "Power To Execute" delegation key for the link between Mobile Agent $A$ and Mobile Agent $B$ (which can be either symmetric key or a public key that was generated by Mobile Agent $A$). The phrase "Power to Execute" is appropriate where, for example, a terminal $A$ is to download and execute a new operating system from a manufacturer via a network operator since the code to be executed will be encrypted by $K_{P-T-E}$. The corresponding secret key that was generated by Mobile Agent $A$ is kept secret. If key $K_{P-T-E}$ is a public key then the Mobile Agent $A$ has a public key usable as a public encryption key and a secret key used for signing. This pair of keys, each comprising a large prime number, may be generated conventionally, for example using a Blum Blum Shub-type generator.

Techniques for pseudo-random number generation are described in L. Blum, M. Blum and M. Shub, "A simple unpredictable random number generator", SIAM Journal on Computing, Vol. 15 pp 364-383, 1986 and in W. Alexi, B. Chor, O. Goldreich and C.P. Schnorr, "RSA and Rabin Functions: Certain parts are as hard as the whole", SIAM Jounal of Computing, Vol 17, pp 194-209, 1988, to which reference may be made.

The value $T_A$ is an optional time stamp that is generated by $A$ and $N_A$ is an optional Nonce (Number used only Once) that is generated by $A$. A nonce may be generated by or used as a seed for a deterministic pseudo - random number generator (for example to generate synchronised series of pseudo-random numbers). The choice of using either a time stamp or a Nonce depends on the technical capabilities of the Mobile Agents and upon the environment - for example utilizing a time stamp hinders replay attacks but a nonce may be preferred where the terminals lack adequately synchronized clocks.

The inclusion of identifier $B$ in $M1$ and Delegation Token $DT$ is desirable to prevent the token from being accepted by anyone other than the intended verifier.

In a variant of this protocol symmetric rather than asymmetric cryptography may be used. In this variant Mobile Agent $A$ and Mobile Agent $B$ have a pre-established relationship in the form of a shared secret key $k_1$, and a keyed-hash or Message Authentication Code (*MAC*) such as one of the MAC algorithms defined in ISO 8731-1 (mentioned above) can be used as a digital signature. One or more shared secret keys may be established, for example, using the techniques described in Yeun and Farnham (*ibid*) and in UK patent applications 0201048.6 and 0201049.4. In a scenario where one Mobile Agent is frequently communicating with the same Mobile Agent (or set of Mobile Agents) this can be more efficient solution as less processing power is required.

A message $M1$ is sent from A to B as follows:

$$M1 : A \rightarrow B : B \| T_A / N_A \| E_{K_1}(K_{P-T-E} \| \Gamma \| MAC_{k_1}(DT)) \qquad \text{(Equation 3)}$$

Here $E_{K_1}(Y)$ denotes symmetric encryption of $Y$ using a key $K_1$ shared between A and $B$. If a Mobile Agent is executing on a host that is trusted and the Mobile agent's secrets (that is, for example, cryptographic keys residing in secure hardware modules) have not been compromised, the protocol of Equation 3 is sufficient to provide a guarantee of data origin. Where $K_{P-T-E}$ is a symmetric cryptographic key it may be generated conventionally, for example by using a pseudo-random number, optionally hashed and/or combined with time data, depending upon the capabilities of the terminal. The key $K_{P-T-E}$ is a form of session key, that is not reused (after a session or after a period or lifetime), thus reducing its vulnerability to attack.

Again, in order to protect against delegation token duplication and delegation token deletion, the delegation token *DT* is preferably constructed to include the intended recipient and a freshness value such as a timestamp, and/or a random number (which can be used more than once, for example a number from a pseudo-random sequence) and/or a nonce. As previously mentioned, clock based timestamps require synchronized clocks, which may not be practical for some platforms.

The above protocols lend themselves to cascade delegation, that is where there are multiple Mobile Agents to delegation which is cascaded from an initial Mobile Agent *A*, to a second agent in the chain *B*, then to a third agent *C*, and so on to a final agent of the chain, say *Z*, before data is returned, or a final message is sent, to the original Mobile Agent *A*. Such a chain has already been described in more detail with reference to Figure 5.

In the cascaded protocols described below the original Mobile Agent *A* is assumed to be fully trusted by the other Mobile Agents and each of the Mobile Agents from *A* to *Z* is able to produce a valid signature simply by using the Mobile Agent's cryptographic key to sign a Delegation Token. The described protocols have the advantage of relatively little increase in complexity and message size as the cascade of delegation proceeds down the chain.

For both asymmetric and symmetric cryptographic embodiments the initial stage of delegation (ie. that from *A* to *B*) is the same as previously described. Thus for asymmetric cryptography:

$$M1 : A \rightarrow B : B \| T_A / N_A \| P_B (K_{P-T-E} \| \Gamma \| S_A (h(DT))) \qquad \text{(Equation 4)}$$

The message for a second stage of delegation, from *B* to *C* is then:

$$M2 : B \rightarrow C : $$
$$C \| T_B / N_B \| B \| T_A / N_A \| P_C (K_{P-T-E'} \| \Gamma' \| S_B (h(DT'))) \| \Gamma \| K_{P-T-E} \| S_A (h(DT)))$$

$$\text{(Equation 5)}$$

where

$$DT' = K_{P-T-E'} \| C \| T_B / N_B \| \Gamma'$$

$K_{P-T-E'}$ is a power to execute delegation key between Mobile Agent *B* and Mobile Agent *C*, and $\Gamma' = (R', L')$ where $R'$ = a request or set of roles or tasks and $L'$ = a lifespan of the delegation token *DT'* that was generated by Mobile Agent *B*. It will be recognized that $S_A(h(DT)))$ is available to *B* for inclusion in *M2* as it was received by *B* (encrypted) in message *M1*.

Thus the *DT* provided by Mobile Agent *A* is incorporated or cascaded within the message of Mobile Agent *B*. The inclusion of identifier *C* in *M2* and *DT'* is desirable to prevent the token from being accepted by anyone other than the intended verifier and, as before, a freshness value such as a time stamp $T_B$ or nonce $N_B$ may also be added. Further delegations give rise to further signed *DTs* by extension of the same procedure as required.

In the case of symmetric cryptography, we assume a pre-established relationship in form shared secret keys $k_i$, $i = 1, 2,..., n$ and keyed-hash or *MAC* signatures. Here a Mobile Agent is able to produce a valid *MAC* using its cryptographic key to *MAC* the relevant Delegation Token. However since each symmetric key is preferably only shared between each pair of Mobile Agents in the chain (as opposed, for example, to each agent knowing the shared secret keys for each other agent in the chain), if there is a dispute each agent in the chain is involved in reviewing and confirming or verifying the delegation chain, for example each agent confirming the *MAC* it received.

A protocol for symmetric cryptography cascade delegation follows.

The initial stage of delegation (ie. that from *A* to *B*) is the same as previously described for symmetric cryptography:

$$M1: A \rightarrow B: B \| T_A / N_A \| E_{K_1}(K_{P-T-E} \| \Gamma \| MAC_{k_1}(DT)) \qquad \text{(Equation 6)}$$

The message for a second stage of delegation, from $B$ to $C$ is then:

$$M2: B \rightarrow C:$$
$$C \| T_B / N_A \| B \| T_A / N_A \| E_{K_2}(K_{P-T-E'} \| \Gamma' \| MAC_{k_2}(DT')) \| \Gamma \| K_{P-T-E} \| MAC_{k_1}(DT))$$

$$\text{(Equation 7)}$$

where $E_{K_1}(Y)$ denotes the symmetric encryption on $Y$ using the shared key $K_i$, $i = 1, 2,..., n$ between $i$ and $i+1$, the delegation token $DT'$ generated by $B$ is

$$DT' = K_{P-T-E'} \| C \| T_B / N_B \| \Gamma'$$

and where $K_{P-T-E'}$ is a power to execute delegation key between Mobile Agent $B$ and Mobile Agent $C$ and $\Gamma' = (R',L')$ where $R' =$ a request or set of roles or tasks and $L' =$ a lifespan of the delegation token $DT'$ that was generated by Mobile Agent $B$.

Again the $DT$ provided by Mobile Agent $A$ is incorporated or cascaded within the message of Mobile Agent $B$. The inclusion of identifier $C$ in $M2$ and $DT$ is desirable to prevent the token from being accepted by anyone other than the intended verifier and, as before, a freshness value such as a time stamp $T_B$ or nonce $N_B$ may also be added.

Further delegations give rise to further signed $DTs$ by extension of the same procedure as required.

An example of the procedure at the end point of a chain of delegation will now be described. When an originator such as Mobile Agent $A$ passes rights to an intermediary and eventually on to a last delegate, say Mobile Agent $Y$, the last delegate contacts, for example, the server $Z$ of an appropriate service provider (the end point of the chain) and demonstrates that it holds valid (that is properly signed) $DTs$ in order to request that a service is granted to Mobile Agent $A$.

In order for the server to verify the request all the (signed) $DTs$ are attached, so that if a trace of accountability is needed the dissemination of $DTs$ can be traced. This is achieved by each party signing a particular $DT$ when it passes it on to the next party and by also attaching all the signed $DTs$ that have been created in a cascade delegation. The end point is able to verify all the attached signatures (because, for example, appropriate public key certificates are available in PKI) but it may only be legal to only use the $K_{P-T-E}$ delegated, that is furnished, by the last party in the chain of Mobile Agents. This is because data encrypted using this key (whether an asymmetric or symmetric key) may only be decryptable or understood by the last party in the chain of Mobile Agents. Alternatively, depending for example upon the application and upon the available communication links, server $Z$ may respond directly back to $A$ using $A$'s $K_{P-T-E}$.

This arrangement also allows a trace of where tokens are used. A $DT$ provides a power, that is it enables a secure communication or some other security function (a $K_{P-T-E}$ may, for example, be used for a signature), but a $DT$ does not necessarily provide permission to execute that power. For example, referring to Figure 4, network 420 may forbid mobile terminal 416 to provide software (code or data) to terminal 402 which is served by a different network, network 410. Thus permission to use a power may only be granted when, following a service request, a $DT$ is presented to the end point (eg server $Z$) and successfully checked against an access control policy. Such checks may require additional communication with Mobile Agent $A$ and, if so, this communication may be made, for example, over a secure channel such as SSL (secure sockets layer) with PKI support, that provides mutual authentication, confidentiality and integrity between Mobile Agent $A$ and the end point. Typically permission will be needed, for example from a developer, to download and execute software but other data entities, for example coupons, may be transferable without permission.

Referring back now to the above-mentioned example, discussed with reference to Figure 4, where Mobile Agent A requires a movie clip from Mobile Agent B, in one embodiment of the method or protocol the sequence of events is as follows:

    1. Mobile terminal 402 (A) creates a delegation token comprising a delegation key $K$ and a request $\Gamma$ for the desired movie clip (for example, key $K$ being generated conventionally, as described above). The request $\Gamma$ preferably

includes lifetime data L specifying a period of validity for the delegation token $DT$, for example one hour or one day for a movie clip, as well as request data R. A request may be broken down into a series of sub-requests so that, for example, a complete movie may be requested by requesting a series of 15 minute movie clips or an item of software such as a game may be requested in a basic, initial version with additional features added later.

2. Terminal $A$ hashes the delegation token $DT$ and then encrypts the hashed value with $A$'s private key to create a digital signature (alternatively a MAC function may be applied to the $DT$). Hashing is not essential but is preferred as it reduces the quantity of data to be transmitted; in other embodiments, however, $DT$ may be signed (optionally with an algorithm which allows message recovery) without hashing.

3. Terminal $A$ retrieves a public key $P_B$ from a certificate for terminal $B$, for example downloaded from a (read-only) repository held by either network operator 410 or network operator 420. Terminal $A$ then encrypts the delegation key $K$, the request $\Gamma$ and the digital signature (or MAC) using public key $P_B$ (or a shared secret key of $A$ and $B$).

4. Terminal A creates a message M 1 as described above including an identifier $B$ for terminal $B$ (necessary if there is more than one possible recipient and in any case preferred to hinder an impersonation attack) and preferably a timestamp or nonce for freshness. This allows message $M$1 to expire after a time interval, for example if there is no reply within a time window, and thus allows a relatively short period to be defined during which an attack is possible. A timestamp may be preferred where terminals in the chain have synchronized clocks (say, to better than one second) otherwise a nonce may be employed, generated by a pseudo-random number generator starting from a known seed. Preferably the delegation token $DT$ also includes the identifier for $B$ and the timestamp and/or nonce. In this way if an attacker attempts to change the timestamp or nonce this will show up in the delegation token $DT$.

5. Terminal $A$ then sends message $M$1 to terminal $B$, using any conventional communication means.

6. Terminal $B$ receives message $M$1 from terminal $A$.

7. Terminal $B$ decrypts the portion of message $M$1 encrypted with the public key (or in a symmetric system, with the secret key shared by $A$ and $B$) of terminal $B$ (in a PKI infrastructure terminal $B$ possesses or is able to obtain an digital certificate for $A$). Terminal $B$ then extracts delegation key $K$, request $\Gamma$ and the digital signature or MAC of terminal $A$.

8. Terminal $B$ reconstructs the delegation token $DT$ using delegation key $K$, request $\Gamma$ and, where employed, the identifier of terminal $B$ and the timestamp/nonce. Terminal $B$ then applies the same hash function as terminal $A$ to the delegation token $DT$ to determine h($DT$), decrypts the message h($DT$) signed with terminal $A$'s private key using terminal $A$'s public key (for example downloaded from a repository) and compares the two hash values (alternatively, in a symmetric system, the two MACs may be compared). If the two values are the same the message is considered verified or authenticated and hence valid. (In alternative embodiments terminal $A$ may employ the delegation key $K$ to create a digital signature of h($DT$) since terminal $B$ knows or can obtain this key to check the signature. However this provides weaker security).
At this point terminal $B$ has reconstructed and verified the delegation token $DT$ sent from terminal $A$. Thus terminal $B$ is in possession of a valid, authenticated request known to have originated from terminal $A$ (that is, accountable) and a delegation key $K$. Terminal $B$ is thus able to respond to the request, encrypting the movie clip (or other data) with the delegation key $K$ and then sending the encrypted data back to terminal $A$. Terminal $B$ may perform an additional step before responding to the request, for example checking the request against an access or security policy, for example using a separate secure channel such as SSL (secure sockets layer) with PKI support that provides mutual authentication, confidentiality and integrity. Thus in the case of a movie clip, for example, terminal $B$ may check with the network operator that terminal $A$ is permitted to receive the clip. The ability of tenninal $B$ to send encrypted data to terminal $A$ in response to a request may thus be treated separately from the question of whether terminal $B$ has permission (as opposed to power) to respond to the request and perform the desired operation.

9. Assuming, in this example, that terminal $B$ has permission, terminal $B$ encrypts the movie clip using the delegation key and sends the encrypted data back to terminal $A$. (Where a chain exists between $A$ and $B$ the encrypted data may either be sent back down the chain or directly from $B$ to $A$.)

10. Terminal $A$ receives the encrypted movie clip data from terminal $B$ and is able to decrypt this data. Where the delegation key $K$ is a shared secret key terminal $A$ decrypts data using a symmetric cryptographic algorithm. Where the delegation key $K$ is a public key of an asymmetric cryptographic system terminal $A$ retains the corresponding private key and is therefore again able to decrypt the encrypted data.

It can be seen that where asymmetric cryptographic is employed PKI is used so that, for example, the delegation token from *A* may be verified using *A*'s public key. In a practical system where terminal *A* is a mobile terminal incorporating a SIM card, the SIM may store a digital certificate for each terminal in the chain and may also incorporate a processor, for example for key generation. Alternatively all terminals of a network operator may be provided with a digital certificate stored in a central, mutually accessible repository, or any necessary certificates may be sent to a terminal in a message.

The above-described protocol hinders impersonation of the delegation key *K* and of the request $\Gamma$. Broadly speaking terminal *A* creates a delegation token comprising *K* and $\Gamma$, signs this, and encrypts the token and signature with *B*'s public key before sending the combination to terminal *B*. Terminal *B* is able to decrypt the token and signature to extract the key and request, and then use the key to satisfy the request provided that the signature is verified as correct.

This protocol may be extended, as described above, to the case where there is a third entity *C* in the chain. In the above example agent *C* may comprise a server of the network operator for terminal *B* 416 so that if terminal *B* does not possess the movie clip which terminal *A* has requested, terminal *B* is able to retrieve the clip from its associated network operator, before passing the clip on to *A*. In this case the above procedure is modified following step 8, at the point where terminal *B* has received message *M*1, determined the value of the delegation token *DT* and has verified that the digital signature or MAC is that of terminal *A*. The procedure then continues as follows:

9. Terminal *B* creates a new delegation token *DT'* comprising a new delegation key *K'* and a new request $\Gamma$', in a similar manner to the creation of token *DT* by terminal *A*. Both $\Gamma$ and $\Gamma$' include request data R for the desired movie clip but $\Gamma$ and $\Gamma$' will in general have different validity periods and therefore different lifetimes L and L'. The keys *K* and *K'* are different so that each link of the chain is encrypted with a different key. This also provides accountability as will be seen below.

10. Terminal *B* constructs a new message *M*2 which it sends to terminal *C* (the server) as though it is terminal *B* which is requesting the desired movie clip. Thus terminal *B* has, in effect, become an agent for terminal *A*. Message *M*2 is constructed by appending to the decrypted contents of message *M*1 data for delegation token *DT'* and a signature for terminal *B* comprising, for example, a signed hash of *DT'* or an MAC of *DT'*, and then by encrypting the whole with a public key (or a shared secret key) of terminal *C*. Optionally an identifier for *C* and a timestamp/ nonce for *B* may be appended in clear. Message *M*2 is then sent to terminal *C*.

11. Terminal *C* decrypts the encrypted portion of message *M*2 using its private key (or the shared secret key), the decrypted data comprising *DT* and *DT'* and signatures for terminal *A* and terminal *B*. (In a chain of terminals the end terminal has delegation tokens and signatures for all the terminals in the chain.) It will be recognized that there is no need for terminal *B* to possess the private key of terminal *A* in order to generate a message for terminal *C* including a hash of *DT* signed by terminal *A* since this signed has of *DT* was received by terminal *B* in the message *M*1 from terminal *A* (encrypted by *B*'s public key). Thus terminal *C*, in this example, has access to a delegation token and a signature for the token for both terminal *B* and terminal *A* (in a chain of terminals, for each proceeding terminal in the chain). As previously noted, PKI allows each signature of each terminal (*A* and *B*) in the chain to be verified and thus allows each delegation token to be authenticated. The protocol also provides accountability since each entity in the chain (*A* and *B* in this case) has attached their own signed request and keys.

12. Terminal *C* verifies the signature of each entity in the chain (*A* and *B* in this case) and, where desired, checks permissions for the request or requests. Terminal *C* may then either respond directly to terminal *A* using the key *K* of delegation token *DT* to encrypt data for *A*, or terminal *C* may respond to terminal *B*, in particular to request r' using delegation key *K'* to encrypt data which is sent to terminal *B* which in turn forwards the data using key *K* to respond to a request $\Gamma$ of terminal *A*. It will be appreciated that where *K* is a public key of an asymmetric cryptographic system data encrypted by *A*'s key *K* may only be decrypted by terminal *A*.

It can be seen that in this way a secure and accountable chain of delegation can be established by cascading delegation tokens and corresponding signatures. This allows an end point of the chain to trace back accountable actions performed by each entity in the chain. This provides accountability so that if, for example, terminal *B* claims that the communication failed and no message was received from terminal *A*, terminal *C* is able to prove that terminal *B* is incorrect since terminal *B*'s delegation token and signature is in the message *M*2 received and decrypted by terminal *C*. The PKI infrastructure provides terminal *C* with the public keys of all the previous terminals in the chain and terminal *C* is able to access all the intermediate delegation keys. However where data is being sent back over the chain in general only the delegation key from an adjacent (previous) terminal may be employed for encrypting data to be sent back over the chain since only the immediately previous terminal in the chain will have the corresponding private key (or shared secret key).

Where only non-repudiation rather than encryption is desired a mobile terminal may use the delegation key it creates also to sign the message it sends, which simplifies the infrastructure but reduces the level of security. It will be recognized that symmetric cryptography provides integrity checking but does not provide non-repudiation, although symmetric cryptography requires less processing power.

At this point it is helpful for understanding the protocols to provide an overview of the delegation procedure, focusing on the core elements. For the initial message $M1$ (of the asymmetric version of the protocol) the core elements comprise:

$$M1 : A \to B : \quad P_B(K_{P-T-E} \| \Gamma \| S_A(h(DT))) \qquad \text{(Equation 8)}$$

where

$$DT = K_{P-T-E} \| \Gamma$$

In the symmetric version of the protocol $P_B$ becomes $E_{K_1}$ and $S_A(h(DT)))$ becomes $MAC_{k_1}(DT))$.

In the second message $M2$ (of the asymmetric version of the protocol) the core elements comprise:

$$M2 : B \to C : \quad P_C(K_{P-T-E'} \| \Gamma' \| S_B(h(DT')) \| \Gamma \| K_{P-T-E} \| S_A(h(DT))) \qquad \text{(Equation 9)}$$

where

$$DT' = K_{P-T-E'} \| \Gamma'$$

Again, in the symmetric version of the protocol $P_C$ becomes $E_{K_1}$ and $S_B(h(DT)))$ becomes $MAC_{k_2}(DT))$.

The skilled person will readily appreciate the extension of this protocol to $M3 : C \to D$ and, more generally, to $Mi : i \to j$.

Optional but desirable security-related aspects of the protocols are next discussed.

Timestamps may be used to provide freshness and uniqueness guarantees and to detect message replay and are advantageous if security against known-key attacks is required as otherwise the technique is potentially vulnerable to replay attacks for the unilateral key authentication protocol. The security of timestamp-based techniques relies on the use of a common time reference. This implies that host clocks should be available, and synchronisation is necessary to counter clock drift and must be appropriate to accommodate the acceptable time window used. The risk of a denial-of-service attack can be reduced by specifying a lifetime for $\Gamma$, the shorter the lifetime the lower the risk.

In both asymmetric and symmetric cryptographic approaches, each entity maintains a key which it should keep secret, although the public key of asymmetric approach may be disclosed. If this key is compromised the secure delegation protocol cannot be guaranteed so preferably each Mobile Agent is entrusted to securely manage its own key. One advantage of using the public key system is that there is no need for a trusted secret server, but by using a common symmetric key greater performance may be achieved. However, both alternatives offer accountability of delegation since the $DTs$ are always digitally signed. In an asymmetric key-based protocol an end point can confirm the origin of a $K_{P-T-E}$ but there is still a potential risk from an attacker masquerading as a Mobile Agent if the public keys, which may for example be stored in a database, are not securely protected. In the symmetric-key based protocols, the server is always trusted and therefore should not be compromised. The protocols provide auditing mechanisms but in practice these may be of more use in providing evidence for resolving possible disputes than for preventing attacks.

The above described protocols are capable of providing end-to-end accountability among all the involved Mobile Agents and thus help to increase accountability and trust. They are particularly useful for M-Commerce applications, for example for purchasing software components or system or application software to adapt a terminal's mode of operation, where a limited amount of trust may exist between mobile terminals, such as Pocket PCs, mobile phones and laptops, in PAN environment. The techniques are also suitable for the MExE standard for future programmable mobile user equipment. The protocols enable secure download of software, tickets, coupons and m-commerce-related data for each terminal/client request and are relatively efficient (for both symmetric and asymmetric versions) since they have fewer message passes than hitherto. The cascade delegation protocols are compact, efficient and well suited to reconfigurable terminals.

Embodiments of the invention have been described in the context of a server and mobile terminals of a mobile communications system but aspects of the invention also have other applications, for example in networked computer systems and in wired as well as wireless systems. It will also be recognised that in the above protocols, in general, any terminal or a server may comprise the initial message originator and that any terminal or a server may form the end point of a chain.

No doubt many effective alternatives will occur to the skilled person and it will be understood that the invention is not limited to the described embodiments but encompasses modifications apparent to those skilled in the art within the scope of the claims.

**Claims**

1.  A method of initializing a secure communications link between a first, delegating data processing system (A) and a second data processing system (B) to which the first system delegates, the method using a first delegations token DT comprising a first delegation key $K_{P-T-E}$ and associated first request data R, said first request data denoting a request of the first system and said first delegation key being for encrypting data to be sent back to the first system in response to the request, the method comprising:

    generating at said first system a first message M1 comprising said first delegation key and associated first request data and first authentication data $S_A$ for authenticating said first, delegating system, said first authentication data being generated by operating on at least one of said first delegation key and said first request data with a secret authentication key of said first system;
    encrypting said first message using a link encryption key $P_B$ known to both said first and said second data processing systems to form an encrypted first message; and
    sending said encrypted first message from said first system to said second system to initialize said secure communications link.

2.  A method as claimed in claim 1, further comprising:

    receiving at said first data processing system from a previous data processing system a previous encrypted message comprising a delegation key of said previous data processing system and associated previous request data, said previous request data denoting a request of said previous data processing system, and previous authentication data, said delegation key of said previous data processing system and said associated previous request data forming a previous token, said previous authentication data comprising data generated by operating on at least one of said delegation key of said previous data processing system and said previous request data with a secret authentication key of said previous system;
    decrypting said previous encrypted message using a link encryption key known to both said first and said previous data processing systems; and
    including said previous token and said previous authentication data in said first message.

3.  A method as claimed in claim 2 further comprising:

    verifying said previous authentication data; and
    wherein said sending of said encrypted first message is dependent upon a result of said verifying.

4.  A method as claimed in claim 1, 2 or 3, further comprising:

    establishing a secure communications link between said first and second data processing systems using said first delegation key.

5.  A method of initializing a secure communications chain between first, second and third data processing systems, the method comprising:

    initializing a secure communications link between first and second data processing systems (A,B) as claimed in claim 1, and further comprising:

decrypting, at said second system (B), said encrypted first message;

generating, at said second system, a second message M2 comprising said first delegation key and $K_{P-T-E}$ associated first request data R and said first authentication data $S_A$, and a second delegation key and $K_{P-T-E'}$ associated second request data $R^1$ and second authentication data $S_B$, said second key and associated second request data forming a second delegation token $DT^1$, said second authentication data comprising data generated by operating on at least one of said second delegation key and said second request data with a secret authentication key of said second system;

encrypting said second message using a link encryption key $P_C$ known at least to both said second (B) and third (C) state processing systems to form an encrypted second message; and

sending said encrypted second message from said second system to said third system.

6. A method of initializing a secure chain of communication for a chain of data processing systems, the chain comprising a start data processing system and an end data processing system linked via one or more intermediate data processing systems, the method comprising:

initializing successive links of the chain by successive applications of the method of claim 1.

7. A method as claimed in claim 6, wherein the encrypted message data sent in each successive application of the method of claim 1 to a link includes keys and associated request data and authentication data for all previous data processing systems in the chain up to the link.

8. A method as claimed in any one of claims 1 to 7, wherein said encrypting comprises encrypting using an asymmetric cryptographic algorithm.

9. A method as claimed in any one of claims 1 to 7, wherein said encrypting comprises encrypting using a symmetric cryptographic algorithm.

10. A method as claimed in claim 1, comprising operating on both said first key and said first request data with a secret key of said first system.

11. A method as claimed in claim 1, comprising encrypting said first message using a public key of said second data processing system.

12. A method as claimed in claim 1 or claim 5, wherein said first token, and when dependent upon claim 5 said second token, has associated lifetime data.

13. A method as claimed in claim 1 or claim 5 wherein said sending further comprises sending an unencrypted identifier for the recipient.

14. A method as claimed in claim 1 or claim 5, wherein said sending further comprises sending timestamp and/or nonce data.

15. A method of establishing a chain of secure communication links between a plurality of data processing machines such that the identity of each successive data processing machine making up the chain is able to be confirmed by means of respective authentication data, the method comprising performing, at each successive data processing machine in the chain after a first machine, the steps of:

receiving from a previous data processing machine (A) in the chain an encrypted message generated by the method of claim 1 including said first authentication $S_A$ data and said first delegation token DT which includes said first delegation key $K_{P-T-E}$, said first delegation key being for encrypting data to be sent back to the first system;

decrypting said encrypted message;

adding to the decrypted message further delegation token data $DT^1$ and further authentication data $S_B$ for said successive data processing machine to form an extended message M2;

encrypting said extended message; and

forwarding said encrypted extended message to the next machine (C) in the chain;

until an end machine of the chain is reached, whereby said chain of secure communication links is established.

**16.** A method as claimed in claim 15, wherein said delegation token data for each machine includes a delegation key, the method further comprising sending data back from said end machine to a first machine of the chain, said data being encrypted using the delegation key of said first machine.

**17.** A method as claimed in claim 16, wherein said sending sends said data over the chain from said end machine to said first machine.

**18.** A method as claimed in claim 15, 16 or 17, wherein said delegation token data for each machine includes request data for a request associated with the delegation key of the said delegation token data.

**19.** A method as claimed in any one of claims 15 to 18, further comprising generating said authentication data at each successive machine by performing a cryptographic operation on said delegation token data.

**20.** A method as claimed in any one of claims 1 to 19, wherein a said data processing system or machine comprises a mobile terminal of a wireless mobile communications system.

**21.** Processor control code to, when running, perform the method of claim 1 or the method steps of claim 15.

**22.** A carrier carrying the processor control code of claim 21.

**23.** A data processing system configured to perform the method of claim 15.

**24.** Data processing apparatus for delegating to a second data processing apparatus using a delegation token DT comprising a delegation key $K_{P-T-E}$ and associated request data R said request data denoting a request of the apparatus and said delegation key being for encrypting data to be sent back to the apparatus in response to the request, the apparatus, comprising:

a data memory operable to store data to be processed;
an instruction memory storing processor implementable instructions; and
a processor coupled to the data memory and to the instruction memory and operable to process data in accordance with the instructions, the instructions comprising instructions for controlling the processor to:

generate at said apparatus a message M1 comprising said delegation key and associated request data and authentication data $S_A$ for authenticating said delegating,
said authentication data being generated by operating on at least one of said delegation key and said request data with a secret authentication key of said apparatus;
encrypt said message using a link encryption key $P_B$ known to both said and said second data processing apparatuses to form an encrypted message; and
send said encrypted message from said apparatus to said second apparatus to initialize said secure communications link.

**Patentansprüche**

**1.** Verfahren zur Initialisierung einer sicheren Kommunikationsverbindungteilstrecke zwischen einem ersten, delegierenden Datenverarbeitungssystem (A) und einem zweiten Datenverarbeitungssystem (B), an das das erste System delegiert, wobei das Verfahren ein erstes Delegationstoken DT mit einem ersten Delegationsschlüssel $K_{P-T-E}$ und zugeordneten ersten Anforderungsdaten R verwendet, wobei die ersten Anforderungsdaten eine Anforderung des ersten Systems bezeichnen und der erste Delegationsschlüssel zur Verschlüsselung von Daten dient, die als Antwort auf die Anforderung an das erste System zurückgesendet werden sollen, wobei das Verfahren die folgenden Schritte umfaßt:

Erzeugen, in dem ersten System, einer ersten Nachricht M1 mit dem ersten Delegationsschlüssel und zugeordneten ersten Anforderungsdaten und ersten Authentifikationsdaten $S_A$ zur Authentifizierung des ersten, delegierenden Systems, wobei die ersten Authentifikationsdaten durch Bearbeitung mindestens eines von folgendem, nämlich des ersten Delegationsschlüssels und/oder der ersten Anforderungsdaten mit einem geheimen Authentifikationsschlüssel des ersten Systems erzeugt werden;
Verschlüsseln der ersten Nachricht unter Verwendung eines Verbindungsteilstrecken-Verschlüsselungsschlüssels P$_B$, der sowohl dem ersten als auch dem zweiten Datenverarbeitungssystem bekannt ist, um eine verschlüsselte erste Nachricht zu bilden; und
Senden der verschlüsselten ersten Nachricht von dem ersten System an das zweite System, um die sichere Kommunikationsverbindungsteilstrecke zu initialisieren.

**2.** Verfahren nach Anspruch 1, ferner mit den folgenden Schritten:

Empfangen, in dem ersten Datenverarbeitungssystem von einem vorigen Datenverarbeitungssystem, einer vorigen verschlüsselten Nachricht mit einem Delegationsschlüssel des vorigen Datenverarbeitungssystems und zugeordneten vorigen Anforderungsdaten, wobei die vorigen Anforderungsdaten eine Anforderung des vorigen Datenverarbeitungssystems bezeichnen, und mit vorigen Authentifikationsdaten, wobei der Delegationsschlüssel des vorigen Datenverarbeitungssystems und die zugeordneten vorigen Anforderungsdaten ein voriges Token bilden, wobei die vorigen Authentifikationsdaten Daten umfassen, die durch Bearbeitung mindestens eines von folgendem, nämlich des Delegationsschlüssels des vorigen Datenverarbeitungssystems und/oder der vorigen Anforderungsdaten mit einem geheimen Authentifikationsschlüssel des vorigen Systems erzeugt wurden;
Entschlüsseln der vorigen verschlüsselten Nachricht unter Verwendung eines Verbindungsteilstrecken-Verschlüsselungsschlüssels, der sowohl dem ersten als auch dem vorigen Datenverarbeitungssystem bekannt ist; und
Einbeziehen des vorigen Tokens und der vorigen Authentifikationsdaten in die erste Nachricht.

**3.** Verfahren nach Anspruch 2, ferner mit dem folgenden Schritt:

Überprüfen der vorigen Authentifikationsdaten; und

wobei der Schritt des Sendens der verschlüsselten ersten Nachricht von einem Ergebnis der Überprüfung abhängt.

**4.** Verfahren nach Anspruch 1, 2 oder 3, ferner mit dem folgenden Schritt:

Einrichten einer sicheren Kommunikationsverbindungsteilstrecke zwischen dem ersten und dem zweiten Datenverarbeitungssystem unter Verwendung des ersten Delegationsschlüssels.

**5.** Verfahren zur Initialisierung einer sicheren Kommunikationskette zwischen einem ersten, einem zweiten und einem dritten Datenverarbeitungssystem, wobei das Verfahren die folgenden Schritte umfaßt:

Initialisieren einer sicheren Kommunikationsverbindungsteilstrecke zwischen einem ersten und einem zweiten Datenverarbeitungssystem (A, B) nach Anspruch 1 und ferner mit den folgenden Schritten:

Entschlüsseln, in dem zweiten System (B), der verschlüsselten ersten Nachricht;
Erzeugen, in dem zweiten System, einer zweiten Nachricht M2 mit dem ersten Delegationsschlüssel K$_{P-T-E}$ und zugeordneten ersten Anforderungsdaten R und den ersten Authentifikationsdaten S$_A$, und eines zweiten Delegationsschlüssels K$_{P-T-E'}$ und zugeordneten zweiten Anforderungsdaten R$^1$ und zweiten Authentifikationsdaten S$_B$, wobei der zweite Schlüssel und die zugeordneten zweiten Anforderungsdaten ein zweites Delegationstoken DT$^1$ bilden, wobei die zweiten Authentifikationsdaten Daten umfassen, die durch Bearbeitung mindestens eines von folgendem, nämlich des zweiten Delegationsschlüssels und/oder der zweiten Anforderungsdaten mit einem geheimen Authentifikationsschlüssel des zweiten Systems erzeugt wurden;
Verschlüsseln der zweiten Nachricht unter Verwendung eines Verbindungsteilstrecken-Verschlüsselungsschlüssels P$_C$, der mindestens sowohl dem zweiten (B) als auch dem dritten (C) Datenverarbeitungssystem bekannt ist, um eine verschlüsselte zweite Nachricht zu bilden; und
Senden der verschlüsselten zweiten Nachricht von dem zweiten System an das dritte System.

**6.** Verfahren zur Initialisierung einer sicheren Kommunikationskette für eine Kette von Datenverarbeitungssystemen, wobei die Kette folgendes umfaßt: Ein Anfangs-Datenverarbeitungssystem und ein End-Datenverarbeitungssystem, die über ein oder mehrere Zwischen-Datenverarbeitungssysteme miteinander verbunden sind, wobei das Verfahren den folgenden Schritt umfaßt:

Initialisieren aufeinanderfolgender Glieder bzw. Teilstrecken der Kette durch aufeinanderfolgende Anwendungen des Verfahrens nach Anspruch 1.

7. Verfahren nach Anspruch 6, wobei die verschlüsselten Nachrichtendaten, die bei jeder aufeinanderfolgenden Anwendung des Verfahrens nach Anspruch 1 an eine Teiltrecke gesendet werden, Schlüssel und zugeordnete Anforderungsdaten und Authentifikationsdaten für alle vorigen Datenverarbeitungssysteme in der Kette bis zu der Teilstrecke aufweisen.

8. Verfahren nach einem der Ansprüche 1 bis 7, wobei der Verschlüsselungsschritt den folgenden Schritt umfaßt: Verschlüsseln unter Verwendung eines asymmetrischen kryptographischen Algorithmus.

9. Verfahren nach einem der Ansprüche 1 bis 7, wobei der Verschlüsselungsschritt den folgenden Schritt umfaßt: Verschlüsseln unter Verwendung eines symmetrischen kryptographischen Algorithmus.

10. Verfahren nach Anspruch 1 mit dem folgenden Schritt: Bearbeiten sowohl des ersten Schlüssels als auch der ersten Anforderungsdaten mit einem geheimen Schlüssel des ersten Systems.

11. Verfahren nach Anspruch 1 mit dem folgenden Schritt: Verschlüsseln der ersten Nachricht unter Verwendung eines öffentlichen Schlüssels des zweiten Datenverarbeitungssystems.

12. Verfahren nach Anspruch 1 oder 5, wobei das erste Token, und sofern von Anspruch 5 abhängig, das zweite Token zugeordnete Nutzungsdauerdaten hat.

13. Verfahren nach Anspruch 1 oder 5, wobei der Sendeschritt ferner den folgenden Schritt umfaßt: Senden einer unverschlüsselten Kennung für den Empfänger.

14. Verfahren nach Anspruch 1 oder 5, wobei der Sendeschritt ferner den folgenden Schritt umfaßt: Senden von Zeitstempel- und/oder einstweiligen Daten.

15. Verfahren zur Einrichtung einer Kette von sicheren Kommunikationsverbindungsteilstrecken zwischen einer Vielzahl von Datenverarbeitungsmaschinen, so daß die Identität jeder nachfolgenden, die Kette bildenden Datenverarbeitungsmaschine mittels jeweiliger Authentifikationsdaten bestätigt werden kann, wobei das Verfahren den folgenden Schritt umfaßt: Durchführen, in jeder nachfolgenden Datenverarbeitungsmaschine in der Kette nach einer ersten Maschine, der folgenden Schritte:

Empfangen, von einer vorigen Datenverarbeitungsmaschine (A) in der Kette, einer durch das Verfahren nach Anspruch 1 erzeugten verschlüsselten Nachricht mit den ersten Authentifikationsdaten $S_A$ und dem ersten Delegationstoken DT, das den ersten Delegationsschlüssel $K_{P-T-E}$ aufweist, wobei der erste Delegationsschlüssel zur Verschlüsselung von Daten dient, die an das erste System zurückgesendet werden sollen;
Entschlüsseln der verschlüsselten Nachricht;
Hinzufügen weiterer Delegationstoken-Daten $DT^1$ und weiterer Authentifikationsdaten $S_B$ zur entschlüsselten Nachricht, damit die folgende Datenverarbeitungsmaschine eine erweiterte Nachricht M2 bildet;
Verschlüsseln der erweiterten Nachricht; und
Weiterleiten der verschlüsselten erweiterten Nachricht zur nächsten Maschine (C) in der Kette;

bis eine End-Maschine in der Kette erreicht ist, wodurch die Kette sicherer Kommunikatiönsverbindungsteilstrecken eingerichtet ist.

16. Verfahren nach Anspruch 15, wobei die Delegationstoken-Daten für jede Maschine einen Delegationsschlüssel aufweisen, wobei das Verfahren ferner den folgenden Schritt umfaßt: Zurücksenden von Daten von der End-Maschine an die erste Maschine der Kette, wobei die Daten unter Verwendung des Delegationsschlüssels der ersten Maschine verschlüsselt sind.

17. Verfahren nach Anspruch 16, wobei der Sendeschritt die Daten von der End-Maschine über die Kette zur ersten Maschine sendet.

18. Verfahren nach Anspruch 15, 16 oder 17, wobei die Delegationstoken-Daten für jede Maschine Anforderungsdaten für eine dem Delegationsschlüssel der Delegationstoken-Daten zugeordnete Anforderung aufweisen.

19. Verfahren nach einem der Ansprüche 15 bis 18, ferner mit dem folgenden Schritt:

Erzeugen der Authentifikationsdaten in jeder nachfolgenden Maschine, indem eine kryptographische Verarbeitung mit den Delegationstoken-Daten durchgeführt wird.

**20.** Verfahren nach einem der Ansprüche 1 bis 19, wobei ein besagtes Datenverarbeitungssystem oder eine besagte Datenverarbeitungsmaschine ein mobiles Endgerät eines drahtlosen Mobilfunk-Kommunikationssystems umfaßt.

**21.** Prozessorsteuerungscode, um in Betrieb das Verfahren nach Anspruch 1 oder die Verfahrensschritte nach Anspruch 15 durchzuführen.

**22.** Träger, der den Prozessorsteuerungscode nach Anspruch 21 trägt.

**23.** Datenverarbeitungssystem, das dafür konfiguriert ist, das Verfahren nach Anspruch 15 durchzuführen.

**24.** Datenverarbeitungsvorrichtung zum Delegieren an eine zweite Datenverarbeitungsvorrichtung unter Verwendung eines Delegationstokens DT mit einem Delegationsschlüssel $K_{P-T-E}$ und zugeordneten Anforderungsdaten R, wobei die Anforderungsdaten eine Anforderung der Vorrichtung bezeichnen und der Delegationsschlüssel zur Verschlüsselung von Daten dient, die als Antwort auf die Anforderung an die Vorrichtung zurückgesendet werden sollen, wobei die Vorrichtung folgendes umfaßt:

einen Datenspeicher, der betriebsfähig ist, Daten zu speichern, die verarbeitet werden sollen;
einen Anweisungsspeicher, der Anweisungen speichert, die durch einen Prozessor implementiert werden können; und
einen Prozessor, der mit dem Datenspeicher und dem Anweisungsspeicher gekoppelt und betriebsfähig ist, Daten gemäß den Anweisungen zu verarbeiten, wobei die Anweisungen Anweisungen zur Steuerung des Prozessors umfassen, um folgende Schritte durchzuführen:

Erzeugen, in der Vorrichtung, einer Nachricht M1 mit dem Delegationsschlüssel und zugeordneten Anforderungsdaten und Authentifikationsdaten $S_A$ zur Authentifizierung der delegierenden Vorrichtung, wobei die Authentifikationsdaten durch Bearbeitung mindestens eines von folgendem, nämlich des Delegationsschlüssels und/oder der Anforderungsdaten, mit einem geheimen Authentifikationsschlüssel der Vorrichtung erzeugt werden;
Verschlüsseln der Nachricht unter Verwendung eines Verbindungsteilstrecken-Verschlüsselungsschlüssels $P_B$, der sowohl der besagten Vorrichtung als auch der zweiten Datenverarbeitungsvorrichtung bekannt ist, um eine verschlüsselte Nachricht zu bilden; und
Senden der verschlüsselten Nachricht von der besagten Vorrichtung an die zweite Vorrichtung, um die sichere Kommunikationsverbindungsteilstrecke zu initialisieren.

**Revendications**

**1.** Procédé d'initialisation de liaison de communication sécurisée entre un premier système de traitement de données de délégation (A) et un second système de traitement de données (B) pour lequel le premier système délègue, le procédé utilisant un premier jeton de délégation DT comprenant une première clé $K_{P-T-E}$ et les premières données de demande associées R, lesdites premières données de demande indiquant une demande du premier système et ladite première clé de délégation étant pour crypter des données à renvoyer au premier système en réponse à la demande, le procédé comprenant :

la génération sur ledit premier système d'un premier message M1 comprenant ladite première clé de délégation et des premières données de demande associées et des premières données d'authentification SA pour authentifier ledit premier système de délégation, lesdites premières données d'authentification étant générées en exploitant au moins ladite première clé de délégation et/ou lesdites premières données de demande avec une clé d'authentification secrète dudit premier système ;
cryptage dudit premier message en utilisant une clé de cryptage de liaison $P_B$ connue pour à la fois ledit premier et ledit second système de traitement de données pour former un premier message crypté ; et
envoi dudit premier message crypté à partir dudit premier système audit second système pour initialiser ladite liaison de communications sécurisée.

**2.** Procédé selon la revendication 1, comprenant en outre :

réception sur ledit premier système de traitement de données à partir d'un système de traitement de données précédent d'un message crypté précédent comprenant une clé de délégation dudit système de traitement de données précédent et des données de demande précédentes associées, lesdites données de demande précédentes indiquant une demande dudit système de traitement de données précédent, et des données d'authentification précédentes, ladite clé de délégation dudit système de traitement de données précédent et desdites données de demande précédentes associées formant un jeton précédent, lesdites données d'authentification précédentes comprenant des données générées en exploitant au moins ladite clé de délégation dudit système de traitement de données et/ou lesdites données de demande précédentes avec une clé d'authentification secrète dudit système précédent ;

décryptage dudit message crypté précédent en utilisant une clé de cryptage de liaison connue pour à la fois ledit premier et ledit second systèmes de traitement de données ; et

comprenant lesdits jetons précédents et lesdites données d'authentification précédentes dans ledit premier message.

3. Procédé selon la revendication 2 comprenant en outre :

la vérification desdites données d'authentification précédentes ; et
dans lequel ledit envoi dudit premier message crypté dépend du résultat de ladite vérification.

4. Procédé selon la revendication 1, 2 ou 3 comprenant en outre :

l'établissement de liaison de communications sécurisée entre ledit premier et ledit second système de traitement de données en utilisant ladite première clé de délégation.

5. Procédé d'initialisation d'une chaîne de communications sécurisée entre des premier, second et troisième systèmes de traitement de données, le procédé comprenant :

l'initialisation d'une liaison de communications sécurisée entre des premier et second systèmes de traitement de données (A, B) comme cela est revendiqué dans la revendication 1, et comprenant en outre :

le décryptage sur ledit second système (B), dudit premier message crypté ;
la génération, sur ledit second système, d'un second message M2 comprenant ladite première clé de délégation $K_{P-T-E}$ et les premières données de demande associées R et lesdites premières données d'authentification $S_A$, et d'une seconde clé de délégation $K_{P-T-E'}$ et des secondes données de demande associées $R^1$ et des secondes données d'authentification $S_B$, ladite seconde clé et des secondes données de demande associées formant un second jeton de délégation $DT^1$, lesdites secondes données d'authentification comprenant des données générées par l'exploitation d'au moins ladite seconde clé de délégation et/ou des secondes données de demande avec une clé d'authentification secrète dudit second système ;
le cryptage dudit second message en utilisant une clé de cryptage de liaison $P_C$ connue au moins à la fois desdits second (B) et troisième (C) systèmes de traitement de données pour former un second message crypté ; et
l'envoi dudit second message crypté à partir dudit second système audit troisième système.

6. Procédé d'initialisation d'une chaîne sécurisée de communication pour une chaîne de systèmes de traitement de données, la chaîne comprenant un système de traitement de données de début et un système de traitement de données de fin liés via un ou plusieurs systèmes de traitement de données intermédiaires, le procédé comprenant :

l'initialisation des liaisons successives de la chaîne par des applications successives du procédé de la revendication 1.

7. Procédé selon la revendication 6, dans lequel les données de message cryptées envoyées dans chaque application successive du procédé de la revendication 1 à une liaison comprennent des clés et des données de demande associées et des données d'authentification pour tous les systèmes de traitement de données précédents dans la chaîne jusqu'à la liaison.

8. Procédé selon l'une quelconque des revendications 1 à 7, dans lequel ledit cryptage comprend le cryptage utilisant un algorithme cryptographique asymétrique.

9. Procédé selon l'une quelconque des revendications 1 à 7, dans lequel ledit cryptage comprend le cryptage utilisant un algorithme cryptographique symétrique.

10. Procédé selon la revendication 1, comprenant l'exploitation de ladite première clé et desdites premières données de demande avec une clé secrète dudit premier système.

11. Procédé selon la revendication 1, comprenant le cryptage dudit premier message utilisant une clé publique dudit second système de traitement de données.

12. Procédé selon la revendication 1 ou la revendication 5, dans lequel le premier jeton, et lorsqu'il dépend de la revendication 5, ledit second jeton a des données de durée de vie associées.

13. Procédé selon la revendication 1 ou la revendication 5, dans lequel ledit envoi comprend en outre l'envoi d'un identifieur non crypté pour le destinataire.

14. Procédé selon la revendication 1 ou la revendication 5, dans lequel ledit envoi comprend en outre l'envoi de données d'horodatage et/ou de nombre utilisé une seule fois.

15. Procédé pour établir une chaîne de liaisons de communication sécurisée entre une pluralité de machines de traitement de données pour que l'identité de chaque machine de traitement de données successive constituant la chaîne soit capable d'être confirmée au moyen de données d'authentification respectives, le procédé comprenant la réalisation, sur chaque machine de traitement de données successive dans la chaîne après une première machine, les étapes de :

réception à partir d'une machine de traitement de données précédente (A) dans la chaîne d'un message crypté généré par le procédé de la revendication 1 comprenant lesdites premières données d'authentification $S_A$ et ledit premier jeton de délégation DT qui comprend ladite première clé de délégation $K_{P-T-E}$, ladite première clé de délégation étant pour crypter des données à renvoyer au premier système ;
décryptage dudit message crypté ;
addition audit message décrypté d'autres données de jeton de délégation $DT^1$ et d'autres données d'authentification $S_B$ pour que ladite machine de traitement de données successive forme un message étendu M2 ;
cryptage dudit message étendu ; et
envoi dudit message étendu crypté à la machine suivante (C) dans la chaîne ;

jusqu'à ce qu'une machine d'extrémité de la chaîne soit atteinte, de sorte que ladite chaîne de liaison de communications sécurisée est établie.

16. Procédé selon la revendication 15, dans lequel lesdites données de jeton de délégation pour chaque machine comprend une clé de délégation, le procédé comprenant en outre le renvoi de données à partir de ladite machine d'extrémité à une première machine de la chaîne, lesdites données étant cryptées en utilisant la clé de délégation de ladite première machine.

17. Procédé selon la revendication 16, dans lequel ledit envoi envoie lesdites données sur la chaîne à partir de ladite machine d'extrémité à ladite première machine.

18. Procédé selon la revendication 15, 16 ou 17, dans lequel lesdites données de jeton de délégation pour chaque machine comprennent des données de demande pour une demande associée à la clé de délégation desdites données de jeton de délégation.

19. Procédé selon l'une quelconque des revendications 15 à 18, comprenant en outre la génération desdites données d'authentification sur chaque machine successive en réalisant une opération cryptographique sur lesdites données de jeton de délégation.

20. Procédé selon l'une quelconque des revendications 1 à 19, dans lequel ledit système ou ladite machine de traitement de données comprend un terminal mobile d'un système de communications mobile sans fil.

21. Code de commande de processeur pour, lorsqu'il fonctionne, réaliser le procédé selon la revendication ou les étapes de procédé de la revendication 15.

**22.** Support portant le code de commande de processeur de la revendication 21.

**23.** Système de traitement de données configuré pour réaliser le procédé de la revendication 15.

**24.** Appareil de traitement de données pour déléguer à un second appareil de traitement de données en utilisant un jeton de délégation DT comprenant une clé de délégation $K_{P-T-E}$ et des données de demande associées R, lesdites données de demande indiquant une demande de l'appareil et ladite clé de délégation étant pour crypter des données à renvoyer à l'appareil en réponse à la demande, l'appareil comprenant :

    une mémoire de données utilisable pour stocker des données à traiter ;
    une mémoire d'instruction stockant des instructions implémentables par processeur ; et
    un processeur couplé à la mémoire de données et à la mémoire d'instruction et utilisable pour traiter des données selon les instructions, les instructions comprenant des instructions pour commander le processeur pour :

    générer sur ledit appareil un message M1, l'appareil comprenant ladite clé de délégation et des données de demande associées et des données d'authentification $S_A$ pour authentifier ledit appareil de délégation, lesdites données d'authentification étant générées en exploitant au moins ladite clé de délégation et/ou desdites données de demande avec une clé d'authentification secrète dudit appareil ;
    cryptage dudit message en utilisant une clé de cryptage de liaison $P_B$ connue pour à la fois ledit premier et ledit second appareil de traitement de données pour former un message crypté ; et
    envoi dudit message crypté à partir dudit appareil audit second appareil pour initialiser ladite liaison de communication sécurisée.

Figure 1
(PRIOR ART)

EP 1 394 982 B1

Figure 2

MMI

304  CONTROL

AIR

| ANTENNA HARDWARE FIRMWARE OPERATING SYSTEM COMMON SOFTWARE | RF HARDWARE FIRMWARE OPERATING SYSTEM COMMON SOFTWARE | MODEM HARDWARE FIRMWARE OPERATING SYSTEM COMMON SOFTWARE | LINK PROCESSOR HARDWARE FIRMWARE OPERATING SYSTEM COMMON SOFTWARE | INFOSEC HARDWARE FIRMWARE OPERATING SYSTEM COMMON SOFTWARE | MESSAGE PROCESSING & ID HARDWARE FIRMWARE OPERATING SYSTEM COMMON SOFTWARE | USER IO HARDWARE COMMON SOFTWARE |

302a 302b 302c 302d 302e 302f 302g

VOICE/DATA/ MULTIMEDIA/ CONTROL NETWORK

300

Figure 3

EP 1 394 982 B1

Figure 4

EP 1 394 982 B1

27

TERMINAL A (eg MT)

PROCESSOR

COMMS LINK

MEMORY
CRYPTOGRAPHIC CODE
PUBLIC KEY CERTIFICATES

SIM

502

TERMINAL B

PROCESSOR

COMMS LINK

COMMS LINK

MEMORY

504

TERMINAL Z (eg SERVER)

PROCESSOR

COMMS LINK

MEMORY

506

500

# Figure 5

Figure 6

EP 1 394 982 B1